# EUROPEAN PATENT APPLICATION

(11) **EP 1 630 445 A1**
(43) Date of publication of application: **01.03.2006**
(21) Application number: 05018759.0
(22) Date of filing: 30.08.2005
(51) Int. Cl.: F16D 65/12, B60Q 1/32

(54) **Glowing disk brake rotor**

(30) Priority: 30.08.2004 US 929169
(71) Applicant: Akebono Corporation, Farmington Hills, Michigan 48331 (US)
(72) Inventor: Peters, Robert Allen, Milford Michigan 48381 (US); Baron, Orit Dana, West Bloomfield Michigan 48322 (US)
(74) Representative: Harwardt, Günther

(57) **Abstract**

The present invention includes a mechanism having a brake rotor (12) adapted to connect to a vehicle and a brake caliper (16) having a brake pad (18). The brake caliper (16) clamps the brake pad (18) against the brake rotor (12) to slow the vehicle. The clamping causes heating of the brake rotor (12) and a hydrocarbon release. The mechanism also includes a glowing member (38) connected to an outboard face 26 of the brake rotor 12 such that heating causes glowing of the glowing member 38. The glowing member 38 provides a visually pleasing aesthetic appearance from the brake rotor 12 visibly to bystander.

## Description

### FIELD OF THE INVENTION

The present invention relates to disk brake rotors and more Specifically relates to a material embedded in the rotor that glows during brake application.

### BACKGROUND OF THE INVENTION

In a traditional disk brake system, a pair of brake pads with friction members attached thereto is slidably mounted within a caliper body. The brake pads press against a rotor to affect braking and slow a vehicle. As the brake pads press against the rotor, heat is generated and the brake pads wear in the form of debris and gas. In some applications, the disk brake rotor will glow during excessive brake application. In these instances, however, the disk brake rotors may be made of exotic materials such as carbon and glow due to excessive use and heat production. The exotic materials tend to be used in aerospace applications, non-production race cars, and other high-temperature applications. Moreover, glowing due to excessive use in these applications shortens the lifetime or ruins the rotor and/or brake pad altogether.

Various companies producing after-market components for automotive brake systems have developed decorative devices that can be installed in the brake systems and in other areas of the vehicle. Some of these after market packages include neon attached to the under body, altered and exaggerated illumination packages for the front and rear lights of the vehicle, and decorative wheel rims. The decorative wheel rims may include a material that glows when in contact with an ultraviolet light source such as the sun. These glowing rims require exposure to the sun and an otherwise dark background to be seen glowing. Furthermore, these rims will only continue to glow after nightfall when exposed to a suitable ultraviolet producing light source. The aforesaid components on the vehicle, therefore, require an electrical source carried in the vehicle or exposure to the sun during the daylight hours.

### SUMMARY OF THE INVENTION

The present invention includes a mechanism having a brake rotor adapted to connect to a vehicle and a brake caliper having a brake pad. The brake caliper clamps the brake pad against the brake rotor to slow the vehicle. The clamping causes heating of the brake rotor. The mechanism also includes a glowing member connected to an outboard face of the brake rotor such that the heating causes glowing of the glowing member.

Further areas of applicability of the present invention will become apparent from the detailed description provided hereinafter. It should be understood that the detailed description and specific examples, while indicating the various embodiments of the invention, are intended for purposes of illustration only and are not intended to limit the scope of the invention.

### BRIEF DESCRIPTION OF THE DRAWINGS

The present invention will become more fully understood from the detailed description, the appended claims and the accompanying drawings, wherein:
Figure 1 is a partial perspective view of a brake assembly showing a glowing member embedded in a brake rotor constructed in accordance with the teachings of the present invention;
Figure 2 is a front view of the brake rotor constructed in accordance with the teachings of the present invention showing the glowing member configured as an annular ring;
Figure 3 is a cross-sectional view of Figure 2 showing the location of the glowing member in relation to a hub of the brake assembly;
Figure 4 is similar to Figure 2 but shows the glowing member configured in an annular saw tooth configuration;
Figure 5 is similar to Figure 2 but shows the glowing member arranged in an annular wavy configuration;
Figure 6 is similar to Figure 2 but shows the glowing member configured as a plurality of lines normal to the hub on the brake rotor;
Figure 7 is similar to Figure 2 but shows the glowing member configured as a typewritten logo positioned around the brake rotor;
Figure 8 is similar to Figure 2 but shows the glowing member configured as a typewritten logo and associated designs positioned around the brake rotor; and
Figure 9 is similar to Figure 2 but shows the glowing member configured as a plurality of pucks positioned around the brake rotor.

### DETAILED DESCRIPTION OF THE VARIOUS EMBODIMENTS

The following description of the various embodiments is merely exemplary in nature and is in no way intended to limit the invention, its application, or uses.

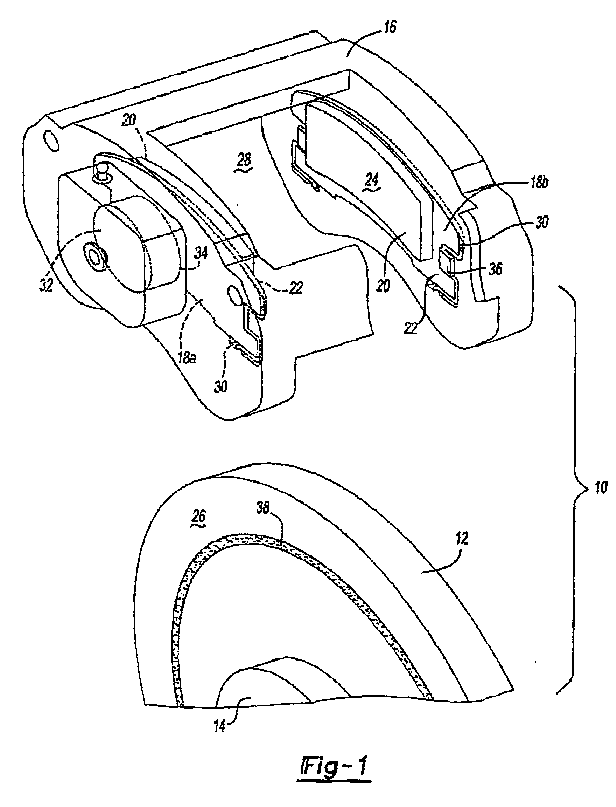

In Figure 1, a brake system is generally indicated by reference numeral 10. The brake system 10 includes a rotor 12 having a hub 14 that is positioned into a caliper 16. The brake system 10 also includes an inboard brake element 18a an outboard brake element 18b, respectively referred to hereinafter as brake elements 18 or may be referred to as the brake pads 18 or the disc brakes 18. It will be appreciated that the brake system 10 is shown in a simplified fashion and, as such, a more detailed explanation of an exemplary brake system is disclosed in commonly assigned United States Patent Number 4,351,421, titled Disc Brake filed July 18, 1980, which is hereby incorporated by reference in its entirety.

Each of the brake elements 18 includes a friction member 20 that is connected to a structural backing 22. It will be appreciated that the friction member 20 is a portion of the brake element 18 that makes contact with the rotor 12 in the brake system 10, which ultimately slows the motion of the vehicle (not shown). When the friction member 20 contacts the rotor 12, the friction member 20 heats and wears, in the form of gas and debris, and as such is considered the expendable portion of the brake system 10. The heat generated by this use is transferred throughout the brake system 10.

The friction member 20 of the present invention can be configured in various shapes and thickness and mounted in various ways on the structural backing 22. One such exemplary configuration of the friction member 20 is disclosed in commonly assigned United States Patent Application titled Friction Materials Configuration and Method of Manufacture for Brake Applications, serial number 10/696,934, filed October 30, 2003, which is hereby incorporated by reference in its entirety.

Moreover, the friction member 20 can have multiple formulations, one or more of which can be mounted to the structural backing 22. One such exemplary formulation is disclosed in commonly assigned United States Patent Application titled Brake Friction Material Including Titanium Dioxide Particles, serial number 10/345,713, filed January 16, 2003, which is hereby incorporated by reference in its entirety. Furthermore, the friction member 20 can be mounted to the structural backing 22 with many different methods. One such mounting method is disclosed in commonly assigned United States Patent number 5,073,099, titled Hot Press for Heat Forming a Disc Pad, issued December 17, 1991, which is hereby incorporated by reference in its entirety.

The structural backing 22 can be typically made of one or more various steel formulations known to one skilled in the art that are suitable for vehicular brake applications. It will be appreciated that many materials may be suitable, which can otherwise withstand the stress and the duty cycle of a vehicular braking environment and an environmental regime in which the brake system 10 is located.

The friction member 20 has a contact face 24 that makes contact with a rotor face 26 of the rotor 12, which can be positioned in a rotor clearance gap 28. The structural backing 22 has an overall shape that is configured to complement and be positioned within interior portions 30 of the caliper 16. It will be appreciated that the caliper 16 includes one or more pistons 32 having a piston face 34 that clamps the brake elements 18 against the rotor 12. It follows that the brake elements 18 must move within the caliper 16 from a rest position to a clamping position. As such, one or more mounting clips 36 can be introduced and disposed between the structural backing 22 and the caliper 16 to among other things reduce sliding friction therebetween. In addition, when the brake elements 18 make contact with rotor 12, the contact face 24 of the brake elements 18 contacts the rotor face 26 and a glowing member 38 embedded therein.

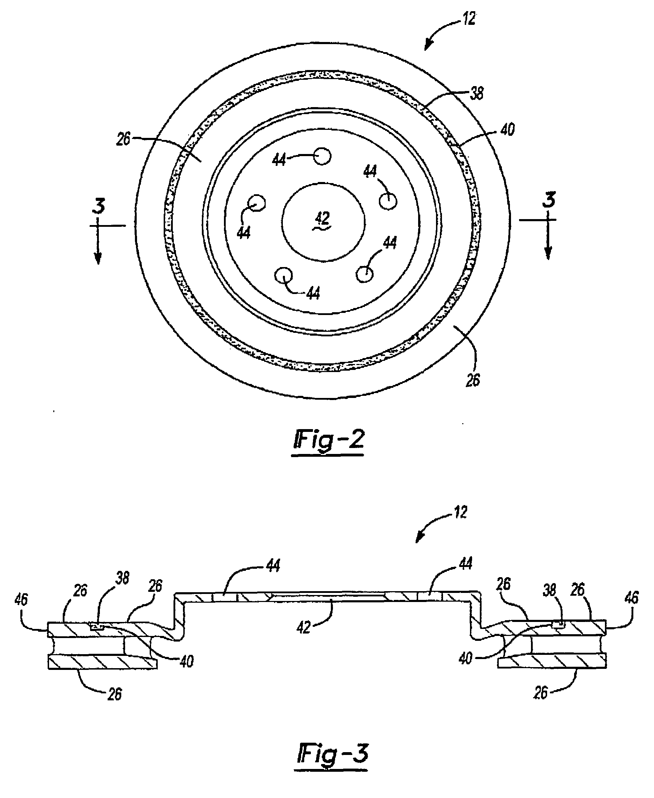

With reference to Figures 2 and 3, the rotor 12 includes the glowing member 38 configured in an annular ring about the rotor 12. The glowing member 38 can be disposed within the rotor 12 such that it sits flush with the rotor face 26. A groove 40 can be cut or cast into the rotor 12 to accept the glowing member 38. The groove 40 can be cut in a simple rectangular shape (Figure 3) or otherwise configured in a circular shape, a dovetail shape or other suitable shapes to further secure the glowing member 38 within the rotor 12. It will be appreciated that the thickness and overall design of the glowing member 38 can vary with the thickness of the contact of the rotor 12. More specifically, the glowing member 38 can occupy various regions of the rotor face 26 and otherwise be configured in various designs. It will be appreciated, nonetheless, the glowing member 38 resides in a location on the rotor 12 that otherwise is contacted by the friction members 20 during normal braking of the brake system 10.

The rotor 12 further defines a larger aperture 42 and a plurality of smaller apertures 44. The larger aperture 42 is configured such that components from an end of an axle (not shown) can be positioned therein or pass therethrough, in various known configurations. The smaller apertures 44 are configured such that bolts or posts (not shown) can pass therethrough to attach the rotor 12 to the end of the axle in various known configurations. While the glowing member 38 is shown spaced from the edge of the rotor 12 in a location inbound from a rotor edge 46, it will be understood that the glowing member 38 can occupy various regions and radial positions of the rotor face 26. The glowing member 38 may be located on the inboard side of the rotor 12, but would not be easily visible to a bystander.

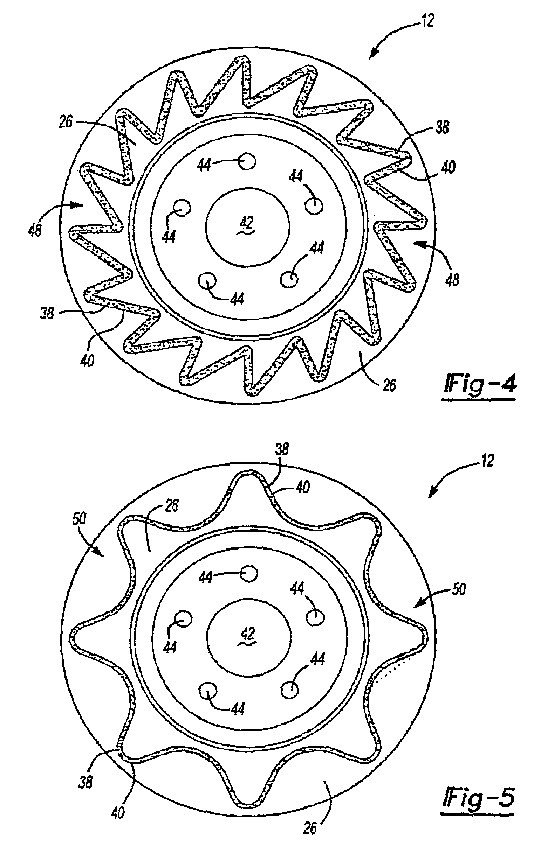

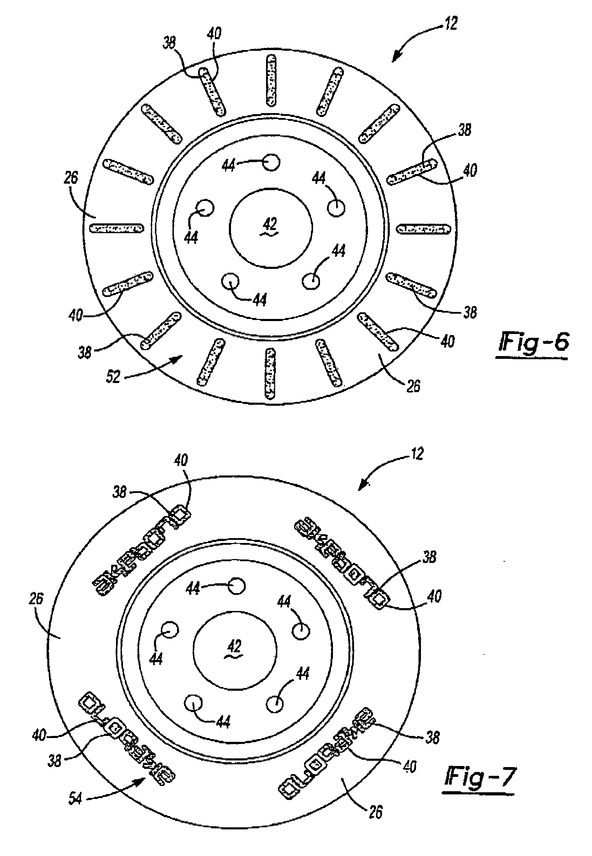

With reference to Figures 4, 5 and 6, the rotor 12 is shown with the glowing member 38 attached thereto. The glowing member 38 can be configured in a serrated configuration as shown in Figure 4 and generally indicated by reference numeral 48. The glowing member 38 can also be configured in a wavy configuration as shown in Figure 5 and generally indicated by reference numeral 50. It will be appreciated that the glowing member 38 can be configured as various shapes and forms and need not be a continuous bead throughout the rotor face 26 of the rotor 12. Furthermore, the glowing member 38 can be configured as a plurality of beads that are normal to the curvature of the hub 14 such that the glowing member 38 appears as a star shaped pattern, as shown in Figure 6 and generally indicated by reference numeral 52. It will be additionally appreciated that the glowing member 38 can be configured to produce various colors. More specifically, the glowing member 38 can be configured to produce a single color on the rotor 12 or a plurality of colors on the rotor 12.

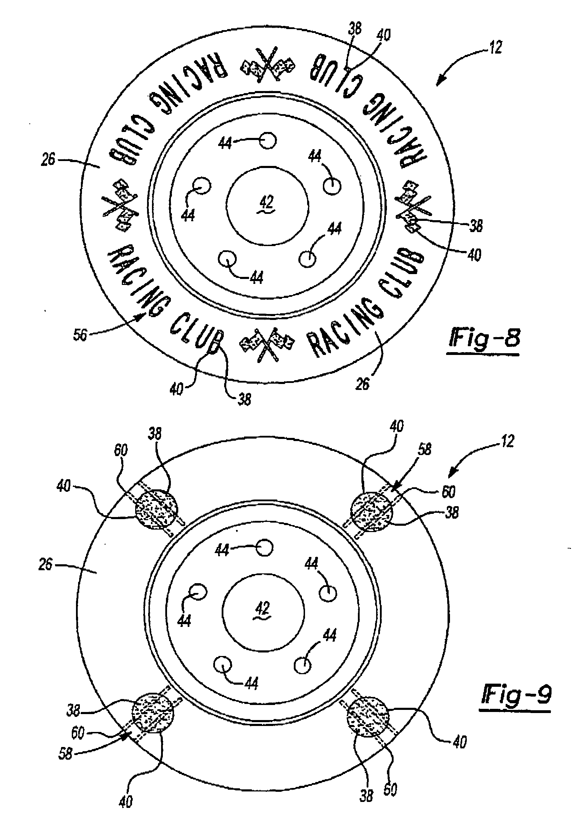

With reference to Figures 7 and 8, the glowing member 38 can be configured so that it appears as text generally indicated as reference numeral 54. It will be appreciated that the text 54 formed on the glowing member 38 can be of various fonts, shapes, sizes, styles and languages. Furthermore, the glowing member 38 can be configured with a graphics and text in combination as shown in Figure 7 and generally indicated by reference numeral 56. Included in the text and graphics combination 56 can be a plurality of colors or a single color that is produced by the glowing member 38. With reference to Figure 9, the glowing member 38 can be configured as a single block or a plurality of pucks 58 that can be recessed within the rotor 12 and held therein with pins 60 or other suitable fasteners. It will be further appreciated that the glowing member 38 can be configured in various forms, shapes or sizes that can include but are not limited to text, logos, geometric shapes, registered trademarks and any other customizable designs including combinations thereof that can be incorporated onto the rotor face 26.

The glowing member 38 can be embedded in the rotor face 26 a distance from the surface of the rotor face 26 such that normal wear of the rotor 12 would still insure that a suitable thickness of the glowing member 38 remains during the lifetime of the rotor 12. To that end, the rotor 12 can wear to a point (exceeding normal and advisable wear) such that the glowing member 38 no longer exists within the rotor face 26. The wearing of the rotor 12 to that point, however, is beyond the normal and advisable wear point of the rotor 12 such that wear of the rotor 12 to that degree would necessitate replacement of the rotor 12. It will be understood therefore that the normal degree and depth of wear to the rotor 12 is not greater than the depth of the embedded glowing member 38 in the rotor face 26.

The glowing member 38 includes platinum bright embers, which are commercially available from Advanced Catalyst Systems of Marysville, Tennessee. The platinum bright embers are a form of catalytic imitation embers, such that any suitable catalytic imitation ember may be used. Briefly, platinum bright embers comprise refractory ceramic wool pieces coated with an oxidation catalyst. While ceramic wool is preferred, alumina silica fibers or Rockwool can also be used. The oxidation catalyst can include platinum, palladium, rhodium, cobalt, manganese, or mixtures thereof. in a preferred arrangement, the oxidation catalyst uses platinum combined with the refractory ceramic wool. The various configurations of the platinum brake embers along with a more detailed description is disclosed in United States Patent Application Publication Number US 2003/0039932 to Campbell et al. titled Catalytic Embers For Use With A Gas Fired Log Set published February 27, 2003, which is hereby incorporated by reference in its entirety.

The glowing member 38 further includes a resin in which the platinum bright embers are mixed. The resin and platinum bright ember mixture can be placed into the groove 40 on the rotor face 26 to form various designs, some examples of which are shown in Figures 2-6. When the glowing member 38 is exposed to an elevated temperature and a hydrocarbon content, the glowing member 38 glows in a visually perceptible way such that it is noticeable from a distance from the rotor 12 by among other things the human eye (not shown). More specifically, the glowing member 38 when heated by the use of the brake system 10 and exposed to hydrocarbons, which are released during use of the brake system 10, results in a reaction yielding visually perceptible light. The brightness of this light is great enough to be visually perceptible to a bystander standing away from a vehicle. It will be appreciated that distance in which the bystander can stand from the rotor 12 varies with the design of the glowing member 38, the amount of ambient light, weather conditions, and/or physical obstructions. The glowing member 38 configured as a single annular ring glowing brightly against a perfectly dark night will be more visible and ascertainable than the glowing member 38 configured with an intricate design against a bright sun.

When the brake system 10 clamps against the rotor 12, the friction members 20 come in contact with the rotor face 26 and generate heat thereby slowing the vehicle. In this generation of heat and slowing of the vehicle, the friction members 20 wear and give off gas and debris. The gas and debris includes among other things a hydrocarbon content. The glowing member 38 containing the platinum bright embers glows in response to the elevated temperature and a presence of hydrocarbons both of which are due to the use of the brake system 10. It will be appreciated that after the rotor 12 cools, when the brake system 10 is no longer slowing the vehicle, the glowing member 38 will cease to glow as the temperature reduces and the presence of hydrocarbons diminishes. It will further be appreciated that the glowing member 38 can glow for a duration that coincides with a duration of contact between the friction members 20 and the rotor face 26. Moreover, the glowing member 38 can be configured to glow for a duration that exceeds the time in which the friction members 20 are in contact with the rotor face 26. Furthermore, the glowing member 38 can be configured to glow with differing intensities based on the intensity of use of the brake system 10. More specifically, the glowing member 38 can glow brighter based on a more extreme use of the brake system 10 such that heavy braking will induce a brighter glow.

Additional hydrocarbon coritent can be added to the glowing material 38, the friction members 20 or the contact face of the rotor 12. One such possibility of additional hydrocarbon material can include use of a phenolic resin that can be combined with the glowing member 38 or included therewith on the rotor face 26. The presence of additional hydrocarbon content will facilitate a brighter and/or longer emission from the glowing member 38. It will be appreciated that the phenolic resin can be configured with different densities. The differing densities can be configured to provide improved oxygen exposure to the glowing member 38. Other sources of hydrocarbon content can be from cashew particles, rubber particles are other components of the brake system 10. It will also be appreciated that acrylics and epoxies can be used to mount the glowing member 38 to the rotor 12.

The glowing member 38 along with the other components of the brake system 10 must be configured to withstand the regime in which they will be installed. To that end, a normal brake service temperature can exceed about 250 degrees Fahrenheit (about 121 degrees Celsius). Moreover, temperatures at the interface between the friction member contact face 24 and the rotor face 26 can exceed about 1800 degrees Fahrenheit (about 1000 degrees Celsius). In all, the glowing member 38 provides a visually pleasing aesthetic while not detracting from performance, safety and durability of the brake system 10.

The description of the invention is merely exemplary in nature and, thus, variations that do not depart from the gist of the invention are intended to be within the scope of the invention. Such variations are not to be regarded as a departure from the spirit and scope of the invention.

## Claims

1. A mechanism in a vehicular braking system (10) comprising:
a brake rotor (12) adapted to connect to a vehicle;
a brake caliper (16) having a brake pad (18), said brake caliper (16) clamping said brake pad (18) against said brake rotor (12) adapted to slow said vehicle, wherein said clamping causes heating of said brake rotor (12); and
a glowing member (38) connected to said brake rotor (12), wherein said heating causes glowing of said glowing member (38).

2. The mechanism of Claim 1 wherein said clamping causes release of a hydrocarbon, wherein said heating and said hydrocarbon causes glowing of said glowing member.

3. The mechanism of Claim 1 wherein said growing member (38) is configured in a ring.

4. The mechanism of Claim 1 wherein said glowing member (38) is configured in one of an annular saw tooth pattern (48), an annular wavy pattern (50) and combinations thereof.

5. The mechanism of Claim 1 further comprising an outboard face of said brake rotor (12), wherein said glowing member (38) is connected to said outboard face (26).

6. The mechanism of Claim 1 wherein said glowing member (38) is configured as text (54, 56).

7. The mechanism of Claim 1 wherein said glowing member (38) is configured as one of a source-designating text (54), a source-designating picture and combinations thereof.

8. The mechanism of Claim 1 wherein said glowing member (38) is configured as a puck (58) recessed in said brake rotor (12).

9. The mechanism of Claim 1 wherein said glowing member (38) ceases to glow after said brake caliper (16) ceases to clamp said brake rotor (12).

10. The mechanism of Claim 1 wherein said glowing member (38) ceases to glow after a period of time after said brake caliper (16) ceases clamping said brake rotor.

11. The mechanism of Claim 1 wherein said glowing member (38) is configured to glow in a plurality of colors.

12. The mechanism of Claim 1 wherein said glowing member (38) is configured to glow in a single color.

13. The mechanism of Claim 1 wherein said glowing member (38) is configured to glow with an intensity related to an amount of braking force applied by said brake caliper (16).

14. The mechanism of Claim 1 wherein said glowing member (38) further includes platinum bright embers.

15. The mechanism of Claim 1 wherein said glowing member (38) further includes catalytic imitation embers.

16. The mechanism of Claim 1 wherein said glowing member (38) further includes a phenolic resin.

17. The mechanism of Claim 1 wherein said glowing member (38) further includes an acrylic.

18. The mechanism of Claim 1 wherein said glowing member further (38) includes an epoxy resin.

19. A brake caliper (16) having a pair of brake pads (20) configured to clamp a brake rotor (12) and slow a vehicle such that the brake rotors (12) heats when the vehicle slows, the brake rotor (12) comprising:
a glowing member (38) connected to the rotor (12), said glowing member (38) emits light when the brake rotor (12) heats to an elevated temperature.

20. The mechanism of Claim 19 wherein the clamping causes release of a hydrocarbon, wherein said elevated temperature and said hydrocarbon causes a light emission from said glowing member (38).

21. The mechanism of Claim 19 wherein said glowing member (38) is configured as one of a ring, an annular saw tooth pattern (48), an annular wavy pattern (50), text (54, 56), a source designating text (54), a source designating picture, a logo, a puck (60) and combinations thereof.

22. A device having a moving member (12) and a fixed member (16) configured to contact and slow the moving member (12) thereby heating the moving member (12), the device comprising:
a glowing member (38) connected to one of the moving member (12), the fixed member (16), and combinations thereof, wherein heating of the device causes said glowing member (38) to glow.

23. A device comprising:
a first member;
a second member, wherein contact with said first member causes heating of said first member and said second member and release of a hydrocarbon due to friction therebetween; and
a glowing member (38) connected to one of said first member, said second member and combinations thereof, wherein said heating and a presence of said hydrocarbon causes said glowing member (38) to glow.

24. A method of emitting visible light from a brake rotor (12) comprising:
providing a brake rotor including a glowing member (38) connected thereto;
rotating said brake rotor (12);
clamping said brake rotor (12) with a brake caliper (16), wherein said clamping is adapted to slow a vehicle;
heating said brake rotor (12); and
emitting a light from said glowing member (38).

25. The method of Claim 24 further comprising exposing said glowing member (38) to a hydrocarbon.

26. The method of Claim 24 further comprising ceasing emission of said light from said glowing member (38) when said brake caliper (16) stops clamping said brake rotor (12).

27. The method of Claim 24 further comprising ceasing emission of said light from said glowing member (38) after a period of time after said brake caliper (16) stops clamping said brake rotor (12).
